# EUROPEAN PATENT SPECIFICATION

(11) **EP 4 571 134 B1**
(45) Date of publication and mention of the grant of the patent: **15.04.2026**
(21) Application number: 23461689.4
(22) Date of filing: 14.12.2023
(51) Int. Cl.: F16C 3/02

(54) **CARBON FIBER REINFORCED DRIVESHAFT**
KOHLENSTOFFFASERVERSTÄRKTE ANTRIEBSWELLE
ARBRE DE TRANSMISSION RENFORCÉ DE FIBRE DE CARBONE

(43) Date of publication of application: 18.06.2025
(73) Proprietor: Krawczyk, Maciej, 32-087 Garlica Murowana (PL)
(72) Inventor: Krawczyk, Maciej, 32-087 Garlica Murowana (PL)
(74) Representative: Czarnik, Maciej

(56) References cited:
- EP-A1- 0 440 461
- DE-A1- 102016 123 422
- DE-C2- 3 143 485
- SE-B- 432 133
- US-A- 4 706 364
- US-A- 5 118 214
- US-A1- 2018 313 398
- US-B2- 10 508 682

## Description

The invention relates to the construction of a carbon fiber reinforced driveshaft, especially for vehicles, in the scope of mounting a mounting element located at the end of the shaft to a carbon fiber tube. Depending on the type of shaft, the mounting element can be a pipe joint, a sliding joint, a multi-spline universal joint, a tee connector for a flexible joint or a spline shaft with bearing support.

Driveshafts are rotating components in various machines and vehicles, operating at different speeds. They transmit torque from the engine to the drivetrain system, such as the gearbox, differential and wheels, enabling vehicle movement. Driveshafts include components such as crosses, constant velocity joints, sliding joints, intermediate joints, and flexible couplings. In most cases, the driveshaft is constructed from a cylindrical tube with a circular cross-section. The shape of the shaft affects its strength and driving comfort. Rotating components lacking a streamlined shape may cause unwanted noise, reducing travel comfort.

For many years driveshafts were made from steel tubes. The most popular methods include cold processing, such as drawing, where the steel tube is pulled through a die to make it thinner and longer. Another method is cold rolling. Conversely, in the production process of composite/carbon tubes, carbon fibers are used in the form of thread, tape or yarn. The winding process involves wrapping the core with carbon fibers impregnated with resin around the core or on a core with a selected pattern using proper fiber orientation. This can be single-layer winding, multi-layer winding, or in various directions, depending on the expected mechanical and structural properties of the tube. The production process of composite tubes, called winding, differs from traditional techniques used for steel tubes. Despite carefulness, it is difficult to achieve sharp edges or shapes due to the flexibility and structure of composite materials.

For previously used steel elements in shafts, machining or other readily available methods can be applied to obtain the desired shape. Steel elements have a uniform cross-section and do not consist of layers like composite elements. On the other hand, machining a carbon fiber tube exposes it to weakening and damaging the structure of the layer formed by winding the thread. Any interference in breaking the structure of the fiber tube may deteriorate its mechanical strength. Therefore, the shape of the composite tube must be obtained during the production process, not through subsequent machining. Steel is a commonly used material in mechanical constructions due to its strength, flexibility, and corrosion resistance. Steel profiling and processing processes include cutting, bending, turning, milling, or extrusion. These techniques allow shaping steel into various shapes and dimensions, meeting precise standards and design specifications. During steel processing, it is possible to achieve sharp shapes and precise dimensions due to the plastic properties of this metal and the possibility of precise cutting and forming.

Various designs of driveshafts are known from the state of the art. For instance, U.S. patent application US2002032065 A1 describes a driveshaft construction that enhances the connection between the main shaft body and the yoke. It utilizes toothed insert parts and matching grooves to create a stronger and safer connection. The method of manufacturing this driveshaft involves an assembly and then withdrawal stage, ensuring proper assembly and alignment. In this patent application, a method of knurling the outer surface of the insert element into the composite tube is used. Depending on the knurling execution, the appropriate shape and height of the tooth profile are obtained, which is intended to lock the insert during insertion and prevent rotation during shaft operation. In my solution, knurling and a cylindrical shape inside the tube are not utilized, which does not eliminate the problem of carbon fiber delamination between the appropriate layers of the tube. The use of a shape inside the tube enhances strength and physically blocks the possibility of insert rotation.

On the other hand, the Chinese utility model CN205315467 U discloses a driveshaft made of carbon fiber composite consisting of a tube with pipe joints at both ends. One of the mentioned pipe joints is connected using a cross with a sliding sleeve. The other end of the driveshaft is constructed with a flange joint, cross and pipe joint embedded inside the tube. The shaft tube is made of a carbon fiber composite material, which is a combination of carbon fibers and epoxy resin. This material is very strong and durable, making the driveshaft more efficient and reliable. The utility model is based on connecting a round tube with a round pipe joint using press fit and/or adhesive bonding. The circular-to-circular connections used in the above example do not eliminate the problem of carbon fiber delamination between the appropriate layers of the tube. During delamination, torque will not be transmitted between the driving and driven elements. The use of a polygonal connection eliminates the problem of drive loss during delamination at the tube ends. It is impossible due to the physical blocking of passage between the fibers in the composite tube.

Furthermore, the U.S. patent application US20230143202 A1 presents a pipe joint serving as a mounting element used in vehicles to transfer power from the engine to the wheels. The invention concerns a part called a pipe joint, which is used in a driveshaft. The pipe joint is connected to the driveshaft tube by either adhesive bonding or tight fitting. In this solution, the pipe yoke is made of a composite prepreg material, which is a strong and lightweight material. The use of this material helps improve the efficiency and durability of the driveshaft.

EP0440461 A1 discloses a carbon fiber reinforced driveshaft according to the preamble of claim 1.

In driveshafts, a popular method of joining components is through male and female locks. They are used in intermediate joints, flanged joints, and sliding joints. A sliding joint consists of a sleeve and a multi-spline shaft. Depending on the design, some elements have a female lock, while others have a male lock. Male/female locks are most commonly used for mounting the driveshaft to the gearbox and differential to transfer drive and establish the centering position of the driveshaft.

Driveshafts consist of a tube and side elements attached to it. Tubes, not rods, are used in driveshafts. This means that shafts are not solid in cross-section like rods. Transferring drive through a lock directly in a carbon fiber tube is practically impossible. It would be necessary to use a lock screwed with screws into threads made in a thick-walled composite tube. Using a lock is impossible due to the disruption of the composite tube structure during drilling. Threads are not made directly in composite tubes. Special steel sleeves with internal threads are used, which are pressed or glued in. Using locks to connect two elements aims to center them rather than transfer torque between the composite tube and the inserted or pressed-in insert. In steel shafts, the lock element is connected to the steel tube by welding, fusion or splining. Forming a precise spline in a composite tube during winding is impossible due to thread formation and the inability to achieve sharp or straight angles. Most methods known in steel tubes cannot be used in the production or processing of composite tubes.

The aim of the invention was to obtain a driveshaft with increased strength under high engine power and torque, while maintaining an aerodynamic shape of the shaft to ensure high user comfort and noise reduction. An additional goal was to obtain a carbon fiber shaft with increased resistance to delamination between fiber layers and the mounting element insert. The aim was also to obtain such a shaft construction that the torque is transferred across the entire cross-section of the carbon tube and not gradually between layers as in circular insert connections. Additionally, the solution was to prevent drive loss in the event of insert loosening and to allow for tight or loose fits with the possibility of using adhesive bonding during assembly.

The essence of the invention is a carbon fiber reinforced driveshaft, especially for vehicles, comprising a mounting element including a body, an insert and a carbon fiber tube, characterized in that the insert has a cylindrical-like shape and is equipped with at least one centering ring with a cross-section in the shape of a substantially regular polygon with 10 to 20 angles, wherein the shape of the insert corresponds to the shape of the seating sleeve inside the tube and is configured to mount the mounting element to the seating sleeve of the driveshaft tube by means of a tight fit and/or adhesive bonding, wherein the insert according to the invention includes an additional centering ring, and between the centering rings, there is a portion of the insert with a reduced profile, which, when inserted into the tube, forms a chamber for placing adhesive, and wherein the tube contains two holes for injecting adhesive into the chamber formed by the smaller diameter zone and the inner side wall of the tube, preferably two openings symmetrically placed on opposite sides of the tube.

The use of an additional centering ring facilitates and increases the accuracy of centering the insert with the composite tube. The use of two rings allows the creation of a chamber between the insert and the tube to fill it with adhesive. It is possible to use an insert with a tight fit and a pressed insert additionally secured with adhesive bonding. Combining two different methods increases safety and prevents the element from falling out of the composite tube. It should be noted that driveshafts are subject to various forces from the driving to the driven element. Lack of axiality between mounting elements has a significant impact on the operation of the driveshaft and its wear over time. The adhesive is intended to permanently bond the tube surface to the insert surface without the possibility of movement.

The use of two opposing openings allows for the injection of adhesive through the first opening and the excess to exit through the opposite side. Extruding the adhesive between the openings ensures complete filling of the chamber between the insert and the tube. Tests were conducted to study the method of filling the chamber depending on the number of openings, their position, the number of centering rings, and the density of the adhesive. The most satisfactory results were obtained using two openings.

It is preferably when each of the centering rings of the driveshaft has a cross-section in the shape of a generally regular polygon with 12 to 14 angles, preferably 12 angles. The use of 12 angles is the most optimal solution due to the mechanical strength of the connection, the cylindrical external shape of the composite tube, the minimum number of operations during milling assuming no possibility of rotation of the insert inside the tube, minimizing the risk of tube cracking at the n-angle, optimizing the production process during winding of the composite tube, and eliminating the possibility of rotation between layers of the composite tube.

Preferably, the body of the mounting element in the driveshaft according to the invention constitutes: a pipe joint, a sliding joint, a multi-spline universal joint, a tee connector for a flexible joint, or a spline shaft with bearing support. The use of the above elements with the mounting insert in the carbon tube allows for the construction of different driveshaft designs depending on the requirements. The solution enables the construction of short, long, split driveshafts, with increased angle operation and with an increased range of operation.

It is preferably when the length of the seating sleeve at the ends of the carbon fiber tube of the driveshaft with a cross-section in the shape of a generally regular polygon ranges from 40 to 140 mm. The round shape transfers torque more efficiently than the n-sided shape. This is due to the geometric characteristics and structural properties of both shapes. The round shape may be more efficient in transferring torque than the n-sided shape due to the following reasons: (1) Uniform load distribution: In the round shape, the load and stresses are evenly distributed around the axis, aiding in the uniform transmission of torque. In the case of the twelve-sided shape, there are edges and corners that can create concentrated stresses, potentially leading to weak points and higher stresses. (2) Lesser mass at the perimeter: The round shape has less mass at the perimeter compared to the n-sided shape with the same cross-sectional area. This affects the moment of inertia, resulting in increased efficiency in transferring torque. (3) Absence of edges and corners: The round shape lacks edges or corners, which could be stress concentration points. This may contribute to reducing the risk of cracks or damage compared to the n-sided shape.

The advantage of the invention is its applicability to any type of driveshaft, including in pipe joints, flanged joints, multi-spline universal joints, intermediate shafts for mounting driveshaft support, as well as in sliding joints allowing for extension and retraction of the driveshaft during suspension operation. Each of the above-mentioned elements can be made or adapted to be equipped with a mounting element with an insert corresponding to the shape of the carbon tube's mounting sleeve. There is also the possibility of adapting ready-made driveshaft components to a form conducive to connection without welding or fusion.

The use of the shape connection according to the invention in composite driveshafts has the following advantages: it increases the mechanical strength of the shaft, enhances the strength of the connection between the tube and the insert, self-centers the connection of the insert with the composite tube, allows for tight fit and/or adhesive bonding of the insert, eliminates the problem of carbon fiber delamination at the ends of the tube after connection with the insert, minimizes the risk of unwanted noise caused by non-aerodynamic shape of the rotating element, utilizes the technology of creating composite tubes with a cross-section in the shape of a generally regular polygon only at the ends of the composite tube, and increases the lifespan of the driveshaft during dynamic loading.

The subject of the invention is presented in examples of embodiments not limiting its scope and in the drawing, wherein:
- Fig. 1: illustrates the driveshaft according to the first embodiment, in which the mounting element is equipped with two centering rings with a dodecagonal cross-section,
- Fig. 2: approximately shows the construction of the mounting element of the driveshaft according to the invention in an axonometric projection,
- Fig. 3: illustrates the construction of the mounting element of the driveshaft constituting the joint pin with a multi-wedge in a side view,
- Fig. 4: illustrates the driveshaft according to the second embodiment, in which the mounting element is equipped with one centering ring with a regular dodecagon cross-section,
- Fig. 5: shows a side view of the shaft with two cross-sectional views,
- Fig. 6: illustrates the tested cross-sections of mounting element inserts with different numbers of angles,
- Fig. 7: illustrates the vertex angle α for the insert cross-section in the shape of a dodecagon.

### Example 1

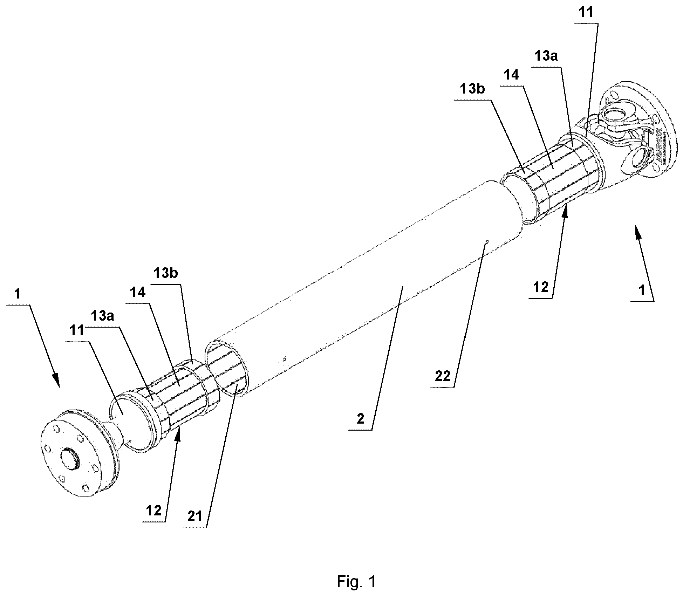

In the first embodiment, depicted in Fig. 1, the carbon fiber-reinforced driveshaft is a car driveshaft consisting of a carbon fiber tube 2 with a radius of 35 mm and two mounting elements 1 placed at the ends of the tube - on the left side a multi-wedge joint pin, and on the right side a pipe joint. Each of the mounting elements 1 comprises a body 11 connected to an insert 12 with a shape similar to a cylinder with a length of 120 mm, but the length of the insert may vary and typically ranges from 40 to 140 mm. The insert 12 is equipped with two centering rings 13a, 13b with a cross-sectional shape of a regular dodecagon. The cross-sectional shape of the centering rings 13a, 13b of the insert 12 can be a polygon with a number of angles ranging from 8 to 20. Example 3 presents test results for polygons with different numbers of angles.

The first centering ring 13a is located at the body 11 of the mounting element 1, and the second centering ring 13b is located at the end of the cylindrical extension of the insert 12. Between the centering rings 13a, 13b, there is a zone with a smaller diameter 14 than the diameter of the centering rings 13a, 13b with a radius ranging from 0.2 to 2 mm smaller. In the first embodiment, the mounting element 1 is attached to the seating sleeve 21 of the carbon fiber tube 2 of the driveshaft by tight fitting of the centering rings 13a, 13b and adhesive bonding. After placing the insert 12 in the corresponding shaped seating sleeve 21 inside the tube 2, a glue chamber is formed. The glue is applied directly to the insert 12 before inserting it into the mounting element 1. In a favorable embodiment, the side wall of the carbon fiber tube 2 is equipped with two holes 22 symmetrically placed on both sides of the tubes 2. In this case, after placing the insert 12 in the seating sleeve 21, the glue is pressed through one of the holes 22 into the glue chamber. After filling the chamber with glue, the excess glue escapes through hole 22 on the opposite side.

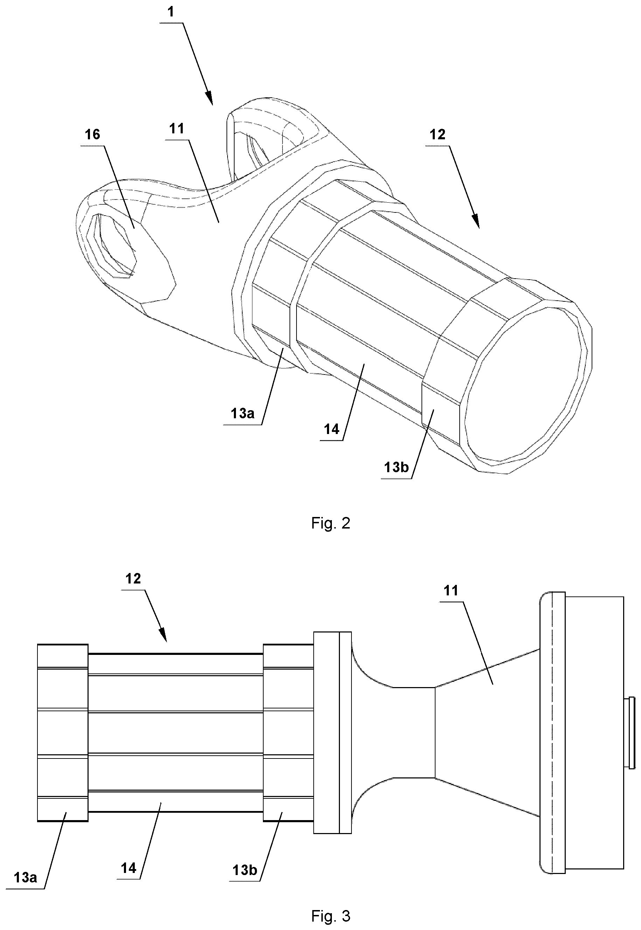

Figures 2 and 3 show two different types of mounting elements 1. The first one is a pipe joint, and the second one is a multi-wedge joint pin. The solution according to the invention can be used in other types of joints.

### Example 2

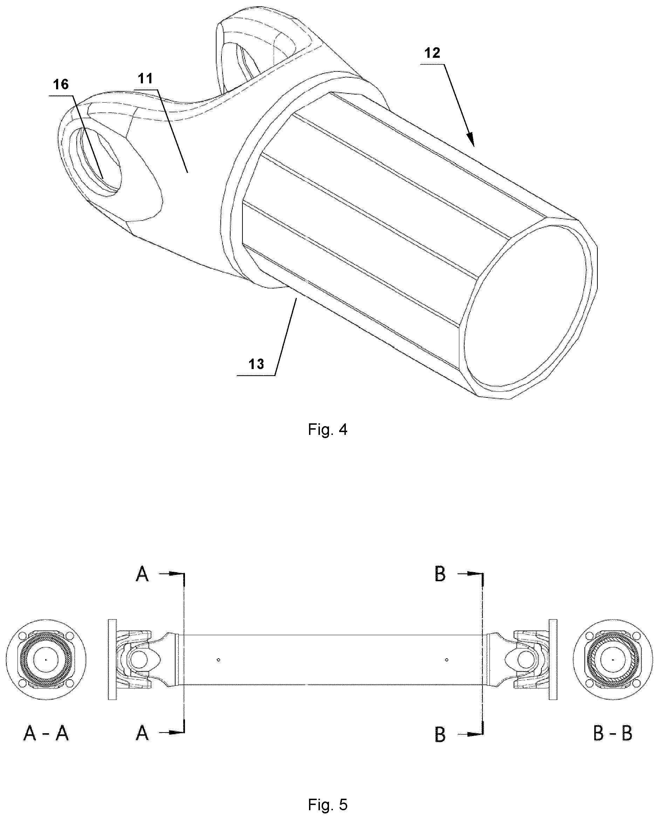

The driveshaft in the second embodiment is similar to the shaft in the first embodiment, with the difference that the insert 12 of the mounting element 1 is equipped with only one centering ring 13, as shown in Fig. 4. In this case, when placing the mounting of the mounting element 1 in the carbon fiber tube 2, a thin layer of glue is used, which covers the entire insert. The solution shown in Fig. 4 utilizes a tight fit.

### Example 3

Tests were conducted on inserts 12 of the mounting element 1 with an outer wall in a cross-sectional shape with a different number of angles. As a result of the tests, it was found that inserts 12 with fewer than 8 angles are unsuitable for use, as such solutions exhibit high stresses of wound carbon fiber of the tube 2 at sharp edges constituting the vertices of the polygon. It is also impossible to obtain a round shape of the wound fiber. On the other hand, inserts 12 with polygons having more than 20 angles were also found to be unsuitable for practical use due to the increased risk of rotation of the insert 12 in the carbon fiber tube 2 at high torque values. Cross-sectional shapes of the inserts ranging from 8 to 20 angles (illustrated in Fig. 5) were divided into three groups based on: the first from 8 to 11, the second from 12 to 14, and the third from 15 to 20 angles. Table 1 presents the results of conducted tests evaluating various functional parameters of the applied solutions, such as mechanical strength, shape cylindricity, production difficulty, risk of rotation inside the tube, risk of tube cracking at the n-angle, imperfections in carbon fiber structure during winding, flexibility in adjusting tube thickness while maintaining cylindrical shape, amount of fiber required to achieve cylindrical shape, production cost, production time, wall thickness from the polygon vertex to the outer tube diameter, and the possibility of rotation between layers.

**Table 1. Influence of insert cross-section on operating conditions**

| Parameters | Number of insert angles | | |
|---|---|---|---|
| | 8-11 | 12-14 | 15-20 |
| Mechanical strength | 3 | 4 | 3 |
| Cylindrical shape | 2 | 3 | 4 |
| Production difficulty | 2 | 2 | 4 |
| Risk of rotation inside the tube | 1 | 2 | 4 |
| Risk of tube cracking at n-angle | 4 | 3 | 2 |
| Imperfections in the carbon fiber structure during winding of the shape | 4 | 2 | 1 |
| Flexibility in adjusting the thickness of the tube while maintaining a cylindrical shape | 1 | 3 | 4 |
| Amount of fiber required to achieve a cylindrical shape | 4 | 2 | 2 |
| Production cost | 4 | 2 | 4 |
| Production time | 4 | 2 | 3 |
| Wall thickness from polygon vertex to outer tube diameter | 4 | 2 | 1 |
| Susceptibility to rotation between layers | 1 | 2 | 4 |
| Legend description: 1 - low/small; 2 - medium; 3 - good/large; 4 - very good/very large | | | |

Analyzing the data presented in Table 1, we can see that the best performance parameters were achieved with a cross-sectional insert of 12, forming a polygon with angles ranging from 12 to 14. Inferior results were obtained for cross-sections with fewer angles (8 to 11) as well as for those with more angles (15 to 20). From a usability standpoint, for inserts with a cross-section of 12 forming a polygon with angles from 12 to 14, the most important mechanical strength, very good cylindrical shape, satisfactory level of risk for tube cracking at n-angle, high flexibility in adjusting tube thickness while maintaining a cylindrical shape, relatively low production cost, and fast production time were achieved. Another important desired parameter was the low susceptibility of the insert with 12 sides to rotation between layers.

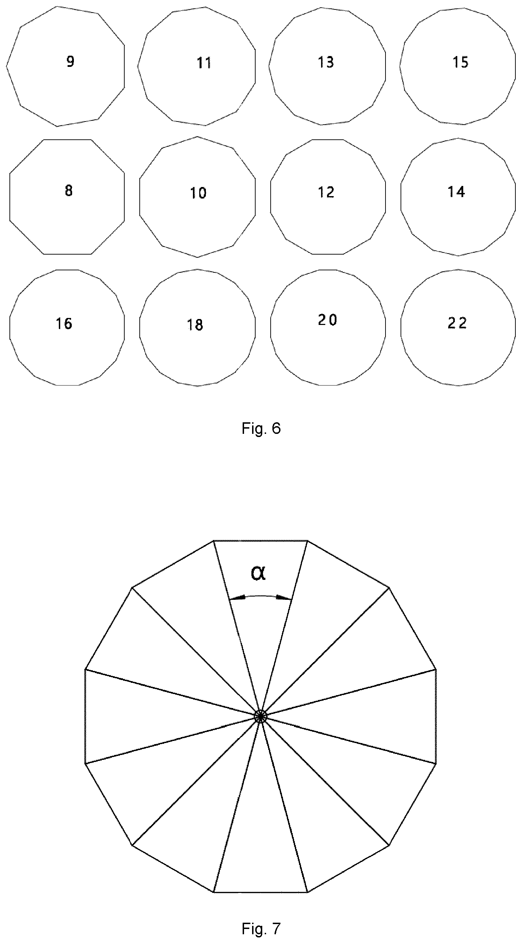

Additionally, it was tested whether the number of angles affects tube 2 with different radii (from 30 mm to 40 mm). It turned out that the obtained results are independent of the radius because the angle α between the vertex radii of the polygon (illustrated in Fig. 7) forming the cross-section of the insert 12 are the same for different radii of carbon fiber tubes 2 (see Table 2). Thus, the results obtained for smaller radii were the same as for larger ones.

**Table 2. Measures of angles between vertex radii of the polygon forming the cross-section of the insert depending on the number of angles**

| Tube radius | Number of angles | | | | | | | | | | |
|---|---|---|---|---|---|---|---|---|---|---|---|
| | 8 | 9 | 10 | 11 | 12 | 13 | 14 | 15 | 16 | 18 | 20 |
| 30 mm | 45° | 40° | 36° | ~32,7° | 30° | ~27,7° | ~25,7° | 24° | 22,5° | 20° | 18° |
| 35 mm | 45° | 40° | 36° | ~32,7° | 30° | ~27,7° | ~25,7° | 24° | 22,5° | 20° | 18° |
| 40 mm | 45° | 40° | 36° | ~32,7° | 30° | ~27,7° | ~25,7° | 24° | 22,5° | 20° | 18° |

## Claims

1. A carbon fiber reinforced driveshaft, especially for vehicles, comprising a mounting element (1) including a body (11) and an insert (12) and a carbon fiber tube (2), wherein the insert (12) has a cylindric-like shape and is equipped with at least one centering ring (13a, 13b) with a cross-sectional shape of a substantially regular polygon having from 8 to 20 angles, wherein the shape of the insert (12) corresponds to the shape of the seating sleeve (21) inside the tube (2) and is configured such that the mounting element (1) is attached to the seating sleeve (21) of the tube (2) of the driveshaft by a tight fit and/or adhesive bonding,
**characterised in that**
the insert (12) comprises an additional centering ring (13b), and between the centering rings (13a, 13b) there is a portion of the insert (15) with a reduced profile, which when inserted into the tube (2) forms a chamber for placing adhesive, and wherein **in that** the tube (2) contains two holes (21) for injecting adhesive into the chamber formed by the zone of smaller diameter (14) and the inner side wall of the tube (2), preferably two holes (21) symmetrically placed on opposite sides of the tube (2).

2. The driveshaft according to claim 1, **characterized in that** each of the centering rings (13a, 13b) has a cross-sectional shape of a substantially regular polygon with from 12 to 14 angles, most preferably 12 angles.

3. The driveshaft according to claim 1, **characterized in that** the body (11) of the mounting element (1) constitutes: a pipe joint or a sliding joint or a multi-wedge joint pin or a tee of an elastic connector or a multi-wedge pin with bearing for shaft support.

4. The driveshaft according to claim 1, **characterized in that** the length of the seating sleeve (21) at the ends of the carbon fiber tube (2) of the driveshaft with a cross-sectional shape of a substantially regular polygon is from 40 to 140 mm.

## Patentansprüche

1. Eine kohlefaserverstärkte Antriebswelle, insbesondere für Fahrzeuge, umfassend ein Befestigungselement (1), das einen Körper (11) und einen Einsatz (12) aufweist, sowie ein Kohlefaserrohr (2), wobei der Einsatz (12) eine zylinderähnliche Form aufweist und mit mindestens einem Zentrierring (13a, 13b) mit einem Querschnitt in Form eines im Wesentlichen regelmäßigen Polygons mit 8 bis 20 Winkeln versehen ist, wobei die Form des Einsatzes (12) der Form der Aufnahmemuffe (21) im Inneren des Rohres (2) entspricht und so ausgeführt ist, dass das Befestigungselement (1) an der Aufnahmemuffe (21) des Rohres (2) der Antriebswelle mittels Presspassung und/oder Klebeverbindung befestigt ist, **dadurch gekennzeichnet, dass** der Einsatz (12) einen zusätzlichen Zentrierring (13b) umfasst und zwischen den Zentrierringen (13a, 13b) ein Abschnitt (15) des Einsatzes mit reduziertem Profil vorgesehen ist, der beim Einsetzen in das Rohr (2) eine Kammer zur Aufnahme von Klebstoff bildet, und wobei das Rohr (2) zwei Öffnungen (21) zum Einbringen von Klebstoff in die Kammer aufweist, die durch die Zone mit kleinerem Durchmesser (14) und die innere Seitenwand des Rohres (2) gebildet wird, vorzugsweise zwei Öffnungen (21), die symmetrisch auf gegenüberliegenden Seiten des Rohres (2) angeordnet sind.

2. Antriebswelle nach Anspruch 1, **dadurch gekennzeichnet, dass** jeder der Zentrierringe (13a, 13b) einen Querschnitt in Form eines im Wesentlichen regelmäßigen Polygons mit 12 bis 14 Winkeln, vorzugsweise 12 Winkeln, aufweist.

3. Antriebswelle nach Anspruch 1, **dadurch gekennzeichnet, dass** der Körper (11) des Befestigungselements (1) ein Rohrgelenk oder ein Schiebegelenk oder einen Mehrkeil-Gelenkzapfen oder ein T-Stück eines elastischen Verbinders oder einen Mehrkeilzapfen mit Lager zur Wellenabstützung bildet.

4. Antriebswelle nach Anspruch 1, **dadurch gekennzeichnet, dass** die Länge der Aufnahmemuffe (21) an den Enden des Kohlefaserrohres (2) der Antriebswelle mit einem Querschnitt in Form eines im Wesentlichen regelmäßigen Polygons 40 bis 140 mm beträgt.

## Revendications

1. Arbre de transmission renforcé par fibres de carbone, notamment pour véhicules, comprenant un élément de fixation (1) comportant un corps (11) et un insert (12), ainsi qu'un tube en fibres de carbone (2), l'insert (12) présentant une forme de type cylindrique et étant muni d'au moins une bague de centrage (13a, 13b) ayant une section transversale en forme de polygone sensiblement régulier comportant de 8 à 20 angles, la forme de l'insert (12) correspondant à la forme de la douille de logement (21) à l'intérieur du tube (2) et étant configurée de sorte que l'élément de fixation (1) est fixé à la douille de logement (21) du tube (2) de l'arbre de transmission par ajustement serré et/ou collage, **caractérisé en ce que** l'insert (12) comprend une bague de centrage supplémentaire (13b) et qu'entre les bagues de centrage (13a, 13b) est disposée une partie (15) de l'insert présentant un profil réduit qui, lorsqu'elle est insérée dans le tube (2), forme une chambre destinée à recevoir un adhésif, et **en ce que** le tube (2) comporte deux orifices (21) pour l'injection d'adhésif dans la chambre formée par la zone de plus petit diamètre (14) et la paroi latérale interne du tube (2), de préférence deux orifices (21) disposés symétriquement sur des côtés opposés du tube (2).

2. Arbre de transmission selon la revendication 1, **caractérisé en ce que** chacune des bagues de centrage (13a, 13b) présente une section transversale en forme de polygone sensiblement régulier comportant de 12 à 14 angles, de préférence 12 angles.

3. Arbre de transmission selon la revendication 1, **caractérisé en ce que** le corps (11) de l'élément de fixation (1) constitue : un joint tubulaire ou un joint coulissant ou un axe à cannelures multiples ou un té d'un raccord élastique ou un axe à cannelures multiples avec roulement pour le support de l'arbre.

4. Arbre de transmission selon la revendication 1, **caractérisé en ce que** la longueur de la douille de logement (21) aux extrémités du tube en fibres de carbone (2) de l'arbre de transmission, ayant une section transversale en forme de polygone sensiblement régulier, est comprise entre 40 et 140 mm.
